# FASCICULE DE BREVET EUROPEEN

(11) **EP 0 329 571 B1**
(45) Date de publication et mention de la délivrance du brevet: **24.03.1993**
(21) Numéro de dépôt: 89420014.6
(22) Date de dépôt: 17.01.1989
(51) Int. Cl.: H02M 3/335, H04N 5/63

(54) **Dispositif de surveillance de démagnétisation pour alimentation à découpage à régulation primaire et secondaire**
Schaltungsanordnung zur Überwachung der Entmagnetisierung für einen Sperrwandler mit primärseitiger und secundärseitiger Regelung
Demagnetization control device for a switch-mode supply with primary and secondary regulation

(30) Priorité: 21.01.1988 FR 8800885
(43) Date de publication de la demande: 23.08.1989
(73) Titulaire: SGS-THOMSON MICROELECTRONICS S.A., 94250 Gentilly (FR)
(72) Inventeur: Maige, Philippe, F-38170 Seyssinet Parizet (FR)
(74) Mandataire: de Beaumont, Michel

(56) Documents cités:
- EP-A- 0 251 551
- WO-A-86/07214

## Description

La présente invention concerne les alimentations stabilisées dites alimentations à découpage.

Une alimentation à découpage fonctionne de la manière suivante : un enroulement primaire de transformateur reçoit un courant qui est par exemple issu d'un pont de redresseurs recevant l'énergie du réseau alternatif. Le courant dans le transformateur est haché par un commutateur (par exemple un transistor de puissance) placé en série avec l'enroulement primaire.

Un circuit de commande du transistor établit des créneaux périodiques de mise en conduction du transistor. Pendant la durée du créneau, le passage du courant est autorisé ; en dehors du créneau, le passage du courant est interdit.

Sur un (ou plusieurs) enroulement secondaire du transformateur, on recueille alors une tension alternative. Celle-ci est redressée et filtrée pour aboutir à une tension continue qui est la tension continue de sortie de l'alimentation à découpage.

Pour stabiliser la valeur de cette tension continue, on agit sur le rapport cyclique de conduction périodique du commutateur, c'est-à-dire sur le rapport entre la durée de conduction et la durée de blocage dans une période de découpage.

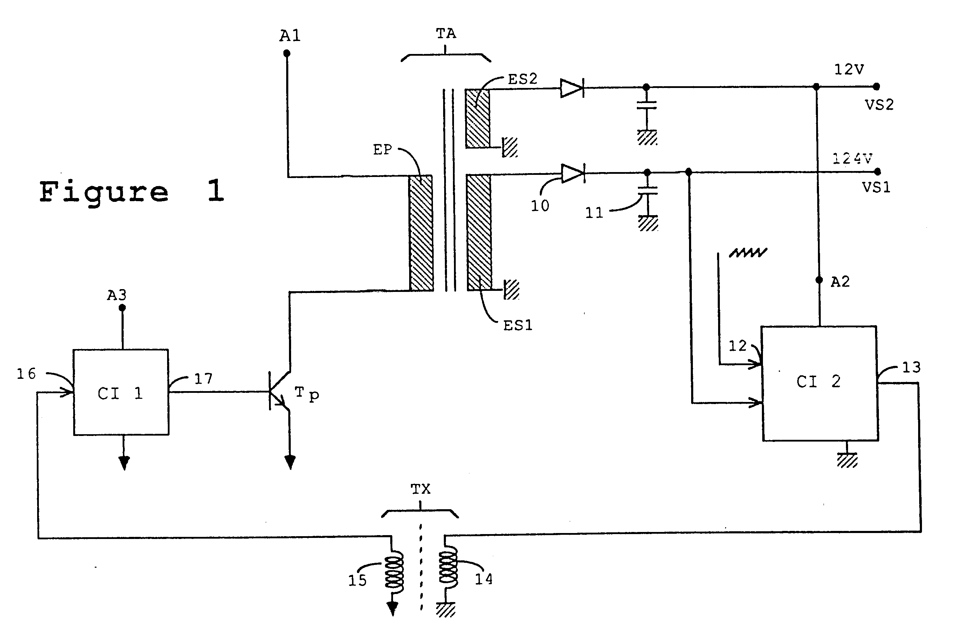

La figure 1 représente à titre d' exemple une architecture d'alimentation à découpage fabriquée par la Demanderesse dans laquelle deux circuits intégrés sont utilisés. L'un des circuits, CI1, sert à commander la base d'un transistor de puissance Tₚ pour lui appliquer des signaux périodiques de commande de mise en conduction et de commande de blocage. Ce circuit de commande de base CI1 est placé du côté de l'enroulement primaire (EP) du transformateur (TA). L'autre circuit intégré, circuit de régulation CI2, est au contraire placé du côté du secondaire (enroulement ES1) et il sert à examiner la tension de sortie VS1 de l'alimentation pour élaborer des signaux de régulation qu'il transmet au premier circuit intégré à travers un petit transformateur d'isolement TX. Le premier circuit intégré CI1 utilise ces signaux de régulation pour modifier le rapport cyclique de mise en conduction du transistor de commutation Tₚ et ainsi réguler la tension de sortie Vs de l'alimentation.

En se reportant à la figure 1, on distingue le transformateur d'alimentation TA dont l'enroulement primaire EP est alimenté en A1 par un courant électrique issu par exemple d'un pont redresseur recevant l'énergie du réseau alternatif. L'autre extrémité de l'enroulement primaire EP est reliée au collecteur d'un transistor de commutation Tp dont l'émetteur est relié à la masse primaire (représentée sur les figures par un triangle noir).

Le transformateur possède plusieurs enroulements secondaires qui sont de préférence isolés galvaniquement du secteur et reliés par exemple à une masse électrique secondaire isolée galvaniquement de la masse primaire.

Ici, chacun des enroulements secondaires a une extrémité reliée à la masse secondaire. L'autre extrémité de chaque enroulement secondaire alimente un condensateur de filtrage passe-bas par l'intermédiaire d'une diode de redressement.

On s' intéressera dans la suite à un seul enroulement secondaire ES1, relié par une diode 10 à un condensateur 11. La tension continue de l'alimentation à découpage est la tension VS1 aux bornes du condensateur 11 ; mais bien entendu d'autres tensions continues de sortie peuvent être obtenues aux bornes des autres condensateurs de filtrage reliés aux enroulements secondaires par l'intermédiaire de diodes de redressement. Ces tensions de sortie constituent des tensions d'alimentation stabilisées pour des circuits d'utilisation non représentés. A titre d'exemple, un enroulement secondaire ES2 fournit une tension d'alimentation stabilisée de quelques volts pour alimenter le circuit intégré de régulation CI2 dont on a déjà parlé. Le circuit CI2 reçoit en entrée la tension VS1 dont la valeur est comparée à une valeur de consigne appliquée à un modulateur de largeur d'impulsions qui établit des créneaux périodiques de largeurs variables en fonction de la valeur de tension de la sortie VS1 ; plus VS1 est faible, plus la largeur des créneaux sera grande.

Les créneaux sont établis à la fréquence de découpage de l'alimentation à découpage. Cette fréquence est donc établie du côté du secondaire du circuit ; elle est engendrée soit à l'intérieur du circuit CI2, soit à l'extérieur dans un circuit non représenté, sous forme d'une tension en dents de scie à la fréquence de découpage choisie, connectée au circuit CI2 sur une borne 12. Cette tension en dents de scie est par ailleurs utilisée de manière connue pour effectuer la modulation de largeur d'impulsions.

Les créneaux de largeurs variables produits par le circuit de régulation CI2 au niveau de sa sortie 13 sont appliqués à un enroulement primaire 14 d'un petit transformateur TX dont l'enroulement secondaire 15, isolé galvaniquement du primaire, fournit des impulsions de largeurs variables. Ce sont ces impulsions, de position et de fréquence déterminées par le circuit de régulation CI2, qui constituent les signaux de régulation appliqués à une entrée 16 du circuit de commande CI1.

Le transformateur TX est constitué par quelques spires de bobinage enroulées sur un bâtonnet de ferrite, les spires du primaire et les spires du secondaire étant suffisamment écartées les unes des autres pour respecter les normes d'isolation galvaniques entre circuits primaires et circuits secondaires de l'alimentation à découpage.

Le circuit intégré de commande CI1 comporte des moyens connus en eux-mêmes destinés à constituer au niveau de sa sortie 17 des créneaux périodiques de largeurs variables reproduisant fidèlement les signaux produits en 13 par le circuit de régulation CI2. Ces signaux produits en 17 par le circuit CI1 sont appliqués à la base du transistor de commutation Tp.

Le circuit CI1 est alimenté en courant électrique en A3 par tout moyen connu, et est relié à la masse primaire.

Un tel dispositif d'alimentation à découpage peut être utilisé avantageusement dans un poste de télévision. Dans ce cas, il est intéressant que la tension en dents de scie appliquée en 12 au circuit CI2 soit synchronisée avec la fréquence de balayage horizontal de façon que le transistor de commutation Tp soit remis en conduction au moment du retour du spot, afin que les parasites engendrés par la commutation du transistor ne soient pas visibles sur l'image.

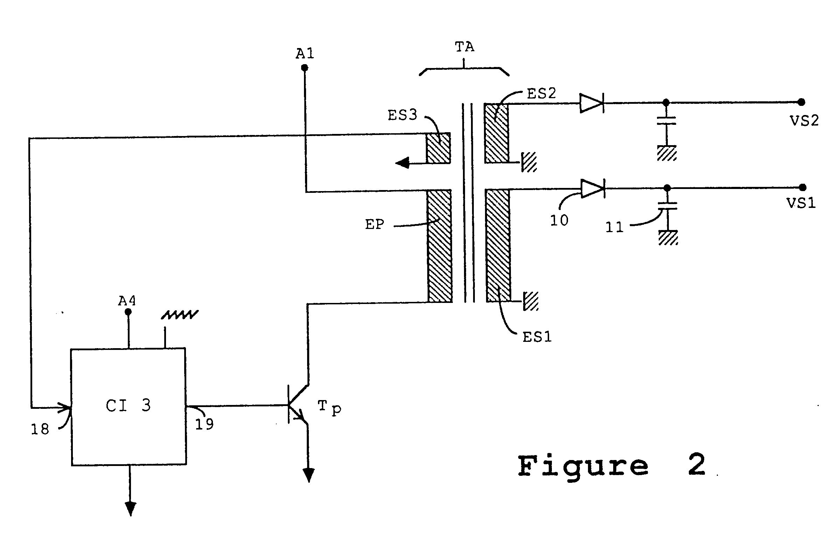

Il existe un autre mode de régulation pour une alimentation à découpage qui est représenté en figure 2. Cet autre mode de régulation est appelé régulation primaire parce qu'elle s'opère par l'intermédiaire d'un circuit CI3 situé du côté primaire.

Sur la figure 2 on distingue, de manière comparable à la figure 1, le transformateur d'alimentation TA comprenant un enroulement primaire EP alimenté en courant redressé et relié au collecteur d'un transistor de commutation Tp dont l'émetteur est relié à la masse primaire. Les enroulements secondaires ES1 et ES2 délivrent chacun des courants électriques qui, après redressement et filtrage, constituent des alimentations dont on désire qu'elles soient stabilisées. Le système de régulation est constitué d'un autre enroulement secondaire ES3 dont une extrémité est reliée à la masse primaire et l'autre extrémité est reliée à l'entrée 18 du circuit CI3. La tension appliquée à l'entrée 18 est comparée, dans le circuit CI3, à une valeur de consigne et est appliquée à un modulateur de largeurs d'impulsions qui établit des créneaux périodiques de largeurs variables en fonction de la valeur de la tension appliquée en 18. Les créneaux sont établis à la fréquence de découpage de l'alimentation à découpage. Cette fréquence est donc établie du côté primaire du circuit, elle est engendrée sous forme d'une tension en dents de scie à une fréquence de découpage choisie.

Ce système de régulation primaire présente l'avantage d'être plus simple à réaliser, puisqu'il ne nécessite pas l'emploi d'un transformateur auxiliaire TX ni d'un circuit de remise en forme du signal de sortie du transformateur TX.

Une telle régulation primaire présente par contre l'inconvénient d'une moins bonne qualité de régulation, ainsi qu'une impossibilité de réaliser facilement une synchronisation entre la fréquence de découpage et une autre fréquence résultant d'un fonctionnement d'un dispositif alimenté du côté secondaire, par exemple d'un dispositif correspondant au balayage horizontal d'un poste de télévision.

Pour des raisons diverses, résultant essentiellement de compromis entre les performances de régulation et le coût des composants, il apparaît de plus en plus intéressant, par exemple dans un poste de télévision, d'utiliser une alimentation à découpage comprenant à la fois un système de régulation primaire et un système de régulation secondaire. Dans le cas d'un poste de télévision, la régulation primaire est utilisée lorsque le poste est en fonctionnement dit de veille, et la régulation secondaire est utilisée lorsque le poste est en fonctionnement dit normal. La régulation primaire est réglée de façon à stabiliser l'alimentation à une valeur inférieure à celle de la régulation secondaire. Ainsi, lorsque le poste de télévision est en mode de fonctionnement normal, l'une des sorties VS1 de l'alimentation stabilisée peut par exemple fournir une tension de 124 volts, et lorsque le poste de télévision est en fonctionnement de veille, cette même sortie VS1 peut fournir une tension voisine de 100 volts. Bien entendu, les autres sorties VS2, etc, fournissent des tensions qui varient selon le mode de fonctionnement dans les mêmes proportions.

Si l'on constitue ainsi une alimentation à découpage comprenant à la fois une régulation primaire et une régulation secondaire, il faut prévoir un système d'alimentation de découpage comprenant à la fois les circuits tels que décrits dans la figure 1 et les circuits tels que décrits dans la figure 2. On s'aperçoit, dans ce cas, que la base du transitor de commutation Tp doit être reliée à la fois à une sortie 17 du circuit CI1 et une sortie 19 du circuit CI3, par exemple par l'intermédiaire d'une porte OU.

Lorsque le poste de télévision est en mode de fonctionnement de veille, seul le dispositif de régulation primaire est en fonctionnement, et le circuit CI3 délivre seul des signaux à la base du transistor de commutation Tp. Lorsque le poste de télévision est en mode de fonctionnement normal, les dispositifs de régulation primaire et secondaire sont simultanément en fonctionnement, mais puisque la régulation primaire est réglée pour stabiliser une tension inférieure à celle de la régulation secondaire, le circuit CI3 ne délivre pas de signaux en sortie puisque, sur son entrée 18, il constate une tension supérieure à la tension de consigne, et c'est seulement le circuit de régulation secondaire CI2 qui délivre des signaux de sortie destinés à commander, via le circuit CI1, la base du transistor de commutation Tp.

Seulement, un tel système d'alimentation à découpage, semblant fonctionner correctement en mode stable de veille ou de marche normale, présente des disfonctionnements lors du passage d'un mode de fonctionnement à l'autre ou si, au cours de son fonctionnement, il se produit une surcharge faisant baisser rapidement la tension de sortie. En effet, durant ces phases transitoires ou durant ces surcharges brutales et accidentelles, il peut se produire pendant un court instant un envoi simultané sur la base du transistor de commutation Tp de signaux provenant du circuit de régulation primaire et du circuit de régulation secondaire. La présence simultanée de signaux en provenance des circuits de régulation primaire et secondaire (qui ne sont pas synchronisés), peut provoquer des remises en conduction du transistor de commutation Tp à des instants où la démagnétisation du transformateur TA n'est pas finie ; et l'on sait, dans ce cas, que le transistor de commutation risque d'être endommagé du fait que la mise en conduction s'effectue alors que le collecteur est à un potentiel trop élevé et que le transistor de commutation est, par ailleurs, amené à faire passer un courant plus important que la normale.

La présente invention concerne un dispositif permettant, en toute circonstance, d'une part, d'assurer la démagnétisation complète du transformateur d'alimentation TA entre des mises en conduction successives, d'autre part, d'éviter le passage de courants trop importants.

De façon générale, des circuits de détection de démagnétisation provoquant une inhibition de mise en conduction d'un commutateur sont connus, par exemple du document WO-A-86/07214.

La présente invention se rapporte à une alimentation à découpage comprenant à la fois un système de régulation primaire et un système de régulation secondaire, chacun de ces deux systèmes de régulation pouvant être amené à délivrer en sortie des signaux constitués de créneaux périodiques de largeurs variables, chacun de ces signaux pouvant prendre un premier état logique (0) correspondant à un ordre de blocage d'un commutateur principal et un second état logique (1) correspondant à un ordre de mise en conduction de ce commutateur principal.

Selon l'invention, cette alimentation à découpage comprend :
- un moyen de comparaison, par rapport à une valeur de tension faible ou nulle, de la tension de sortie d'un enroulement secondaire, la sortie du moyen de comparaison délivrant un signal prenant l'état logique 1 lorsque le transformateur de l'alimentation à découpage est démagnétisé et l'état logique 0 lorsque ce transformateur n'est pas démagnétisé, et
- un circuit logique recevant en entrée le signal de sortie du moyen de comparaison, le signal de sortie du régulateur primaire et le signal de sortie du régulateur secondaire, ce circuit logique délivrant en sortie un signal de commande du commutateur principal pouvant prendre un état logique 0 pour le blocage du commutateur principal ou un état logique 1 pour sa mise en conduction, en fonction des critères suivants :
   * le signal de commande passe à l'état 1 si le signal de sortie du comparateur est à l'état 1 et si le signal de sortie d'au moins un des régulateurs est à l'état 1,
   * le signal de commande passe à l'état 0 quand le signal de sortie du régulateur qui a provoqué la mise à 1 du signal de commande passe à l'état 0.

Selon un mode de réalisation de la présente invention, le circuit logique comprend :
- deux circuits logiques à bascule identiques comprenant chacun une entrée de basculement S, une entrée de remise à zéro R et une sortie inversée Q*,
- une première porte ET et une seconde porte ET, à deux entrées chacune, et une porte OU à deux entrées,
- un ensemble de connexions constituées de telle sorte que le signal de sortie du comparateur parvient à la fois sur les entrées R des circuits de bascule, que les sorties des première et seconde portes ET sont respectivement reliées aux entrées S des circuits de bascule, que les sorties Q* des circuits de bascule sont reliées respectivement aux entrées des seconde et première portes ET, que le signal de sortie du régulateur primaire par vient à l'autre entrée de la première porte ET, que le signal de sortie du régulateur secondaire parvient à l'autre entrée de la seconde porte ET, et que les sorties des deux portes ET sont reliées respectivement aux deux entrées de la porte OU dont la sortie correspond au point de sortie du circuit logique.

Selon un mode de réalisation de l'invention, chacun des circuits logiques à bascule est constitué d'une bascule D, comprenant des entrées D, CK, une sortie Q, et une sortie inversée Q*, d'une porte ET à deux entrées, d'une porte OU à deux entrées et de diverses connexions constituées de façon que l'entrée D est reliée à la sortie Q*, la sortie Q est reliée à l'une des entrées de la porte ET, la sortie de la porte ET est reliée à l'une des entrées de la porte OU et la sortie de la porte OU est reliée à l'entrée CK, l'autre entrée de la porte OU constituant l'entrée de basculement S de l'un des circuits de bascule, l'autre entrée de la porte ET constituant l'entrée de remise à zéro R du circuit de bascule et la sortie Q* de la bascule D constituant la même sortie Q* du circuit de bascule.

Ces objets, caractéristiques et avantages ainsi que d'autres de la présente invention seront exposés plus en détail dans la description suivante d'un mode de réalisation détaillé faite en relation avec les figures jointes parmi lesquelles :
les figures 1 et 2 représentent une alimentation à découpage de l'art antérieur et ont été décrites précédemment ;
la figure 3 est une représentation simplifiée d'une alimentation à découpage comprenant un dispositif de contrôle de la démagnétisation conforme à l'invention ;
la figure 4 représente le circuit logique conforme a l'invention ;
la figure 5 représente plus en détail ce même circuit logique ; et
la figure 6 est un diagramme des états logiques pris par les signaux d'entrée et de sortie du circuit logique dans divers cas pratiques.

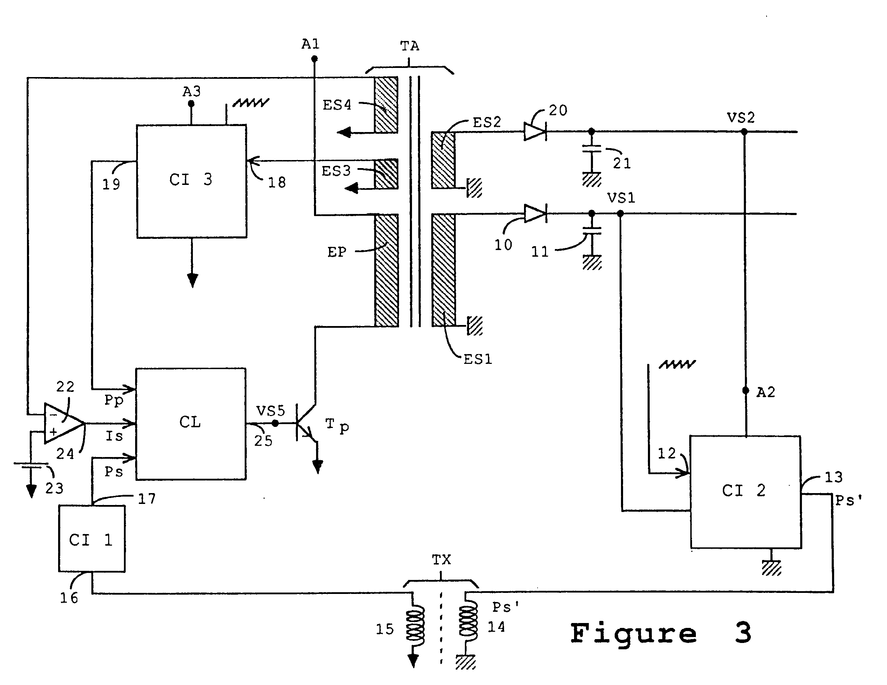

La figure 3 représente le transformateur d'alimentation TA comprenant un enroulement primaire EP, deux enroulements secondaires ES1 et ES2 reliés chacun à une masse secondaire, et un enroulement secondaire ES3 relié à une masse primaire. L'enroulement primaire EP a une extrémité alimentée en A1 par un courant redressé à partir d'un courant alternatif du secteur, et l'autre extrémité reliée au collecteur du transistor de puissance Tp dont l'émetteur est relié à la masse primaire. L'enroulement secondaire ES1 délivre un courant alternatif par rapport à la masse secondaire qui est redressé par une diode 10 et régulé par un condensateur 11 de manière à produire en sortie VS1 une tension de 124 volts, lorsque le poste de télévision est en marche normale. L'enroulement secondaire ES2 produit un courant alternatif qui est redressé par une diode 20 et régulé par un condensateur 21 de façon à produire une tension de sortie de 12 volts lorsque le poste de télévision est en marche normale.

Le circuit de régulation primaire CI3 reçoit sur son entrée un signal électrique provenant de la sortie de l'enroulement secondaire ES3, est alimenté en courant continu en A3 et relié à une masse primaire, et délivre sur sa sortie, 19, un signal de régulation Pp constitué de créneaux périodiques de largeurs variables en fonction de la valeur de la tension de sortie VS3 de l'enroulement secondaire ES3 ; plus VS3 est faible, plus la largeur des créneaux est grande.

Un circuit de régulation secondaire CI2 reçoit en entrée un signal électrique provenant de la ligne d'alimentation de 124 volts VS1, est alimenté en A2 par un courant électrique provenant de la ligne d'alimentation VS2 (12 volts par rapport à la masse secondaire), et produit en sortie 13 un signal Ps′ constitué de créneaux périodiques de largeurs variables en fonction de la valeur de la tension à la ligne VS1 ; plus VS1 est faible, plus la largeur des créneaux sera grande. Les créneaux sont établis à la fréquence de découpage de l'alimentation à découpage. Cette fréquence est générée dans un circuit non représenté, sous forme d'une tension en dents de scie à la fréquence de découpage choisie, introduite dans le circuit CI2 au point 12.

Un circuit CI1 reçoit en entrée 16 un signal provenant d'un enroulement secondaire 15 d'un transformateur TX dont l'enroulement primaire 14 reçoit le signal Ps′ du circuit CI2. Le signal entrant dans le circuit CI1 est traité de façon à fournir en sortie 17 un signal Ps correspondant exactement au signal initial Ps′.

Un enroulement secondaire ES4 du transformateur TA a une extrémité reliée à la masse primaire et l'autre extrémité reliée à l'entrée (-) d'un comparateur 22 dont l'entrée (+) est reliée à une source de tension 23 positive et de faible valeur. La sortie 24 du comparateur 22 délivre un signal Is.

Les signaux Pp, Ps et Is parviennent à l'entrée d'un circuit logique CL dont la sortie 25 est raccordée à la base du transistor de commutation Tp.

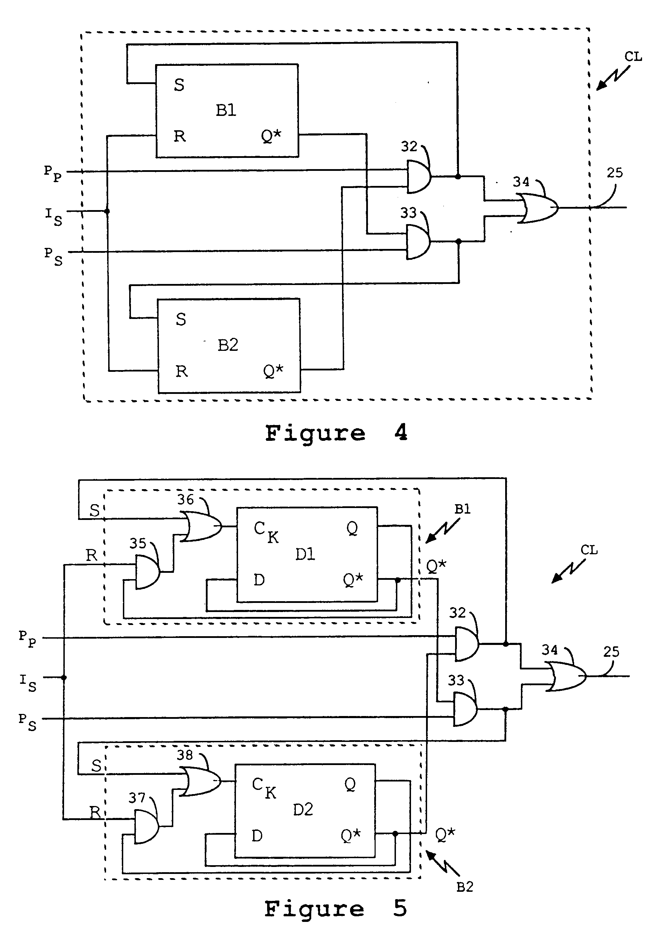

Le circuit logique CL est décrit plus en détail à la figure 4. Ce circuit CL est composé essentiellement de deux bascules RS identiques B1, B2, de deux portes ET 32, 33 et d'une porte OU 34. Chaque bascule B1, B2 comprend une entrée de basculement S, une entrée de remise à zéro R et une sortie inversée Q*. La première porte ET 32 reçoit en entrée, d'une part, le signal Pp, d'autre part, le signal en provenance de la sortie Q* de la bascule B2. La seconde porte ET 33 reçoit en entrée, d'une part, le signal Ps, d'autre part, le signal en provenance de la sortie Q* de la bascule B1. Le signal Is est envoyé simultanément sur les entrées de remise à zéro R des bascules B1 et B2. L'entrée S de la bascule B1 est raccordée à la sortie de la première porte ET 32, et l'entrée S de la bascule B2 est raccordée à la sortie de la seconde porte ET 33. Les sorties respectives des portes ET 32 et 33 sont raccordées aux entrées de la porte OU 34 dont la sortie correspond au point 25 du circuit logique CL.

Lorsque les bascules B1 ou B2 sont mises en service, il peut se produire un aléa sur les sorties correspondantes. Pour pallier cet inconvénient, selon un mode de réalisation de la présente invention, la bascule B1 peut être constituée d'un ensemble logique comprenant, comme cela est représenté en figure 5, une porte ET 35, une porte OU 36 et une bascule de type D, référencée D1. La bascule B2 est constituée de la même façon d'une porte ET 37, d'une porte OU 38 et d'une bascule de type D, référencée D2. L'entrée D de la bascule D1 est reliée à sa sortie inversée Q*, la sortie Q est reliée à une entrée de la porte ET 35, la sortie de la porte ET 35 est reliée à une entrée de la porte OU 36 dont la sortie est reliée à l'entrée CK de la bascule D1. L'entrée S de la bascule B1 est constituée par une seconde entrée de la porte OU 36 et l'entrée R de la bascule B1 est constituée par une seconde entrée de la porte ET 35. La sortie Q* de la bascule D1 correspond à la sortie Q* de la bascule B1. Les liaisons électriques des éléments consécutifs de la bascule B2 sont identiques à celles décrites pour la bascule B1.

Bien entendu, d'autres schémas logiques sont susceptibles d'être imaginés pour constituer les mêmes fonctions logiques que celles précédemment décrites et qui font l'objet de l'invention.

Un dispositif de contrôle de la démagnétisation du transformateur tel qu'illustré en figure 4 (ou 5) fonctionne de la manière suivante.

Lorsque, à un instant donné, le transistor de commutation Tp passe brusquement de l'état passant à l'état bloqué, la tension délivrée par l'enroulement secondaire ES4 qui était négative devient positive et ce pendant toute la durée de démagnétisation du transformateur. Quand le transformateur TA est démagnétisé, la tension devient sinusoïdale amortie et le premier changement de polarité est détecté par le comparateur 22 qui fait passer sa sortie de l'état logique 0 à l'état logique 1. Le signal logique Is qui en résulte est transmis en entrée au circuit logique CL. Le signal Is qui parvient à l'entrée du circuit logique CL passe donc à l'état logique 1 lorsque le transformateur d'alimentation TA est considéré comme complètement ou quasiment démagnétisé. Il en résulte que les sorties Q* des bascules B1 et B2 passent à haut niveau, ce qui valide les portes ET 32 et 33 pour laisser passer le premier des signaux Pp et Ps qui passe à haut niveau.

Si le signal Pp passe le premier à haut niveau, il est transmis par la porte ET 32 et la porte OU 34 à la sortie 25 du circuit CL pour mettre en conduction le commutateur Tp. Le passage à haut niveau de la sortie de la porte ET 32 entraîne l'application d'un signal sur l'entrée S de la bascule B1, ce qui met à 0 sa sortie Q* et inhibe la porte ET 33. L'arrivée éventuelle d'un signal Ps à haut niveau n'aura donc pas d'effet. La conduction du commutateur Tp sera ensuite interrompue quand le signal Pp repasse à 0 indépendamment de l'état du signal Pₛ.

Un nouveau cycle pourra recommencer quand le signal Is, qui est passé à 0 lors du blocage du transistor Tp (magnétisation du transformateur TA), sera repassé à 1 (démagnétisation de ce transformateur).

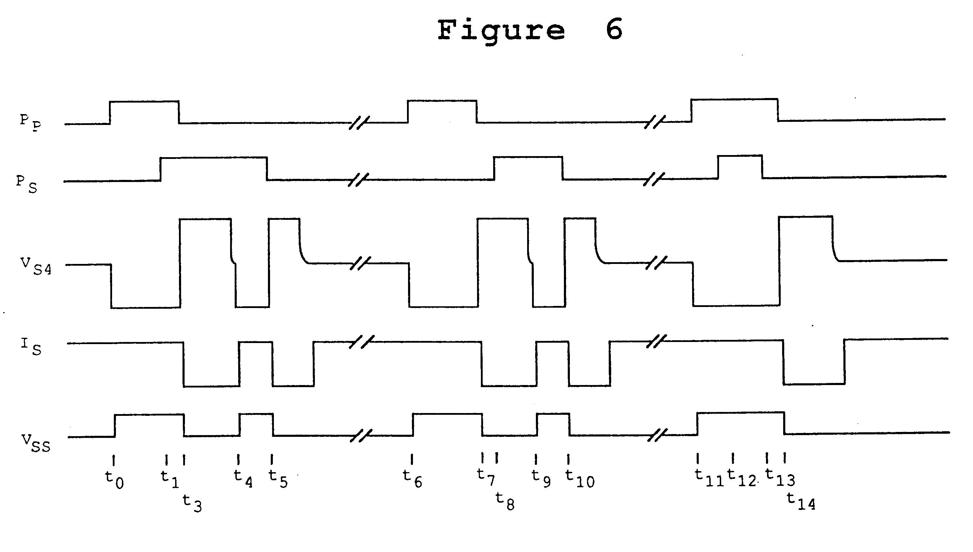

La figure 6 est un diagramme de divers signaux apparaissant aux entrées et aux sorties du circuit logique CL. Ce diagramme indique pour des configurations particulières des signaux Pp et Ps arrivant simultanément la forme d'onde VS4 à la sortie du secondaire ES4 du transformateur TA, et la forme d'onde VS5 à la sortie 25 du circuit CL.

Dans ce diagramme, on se place dans une configuration initiale (instant t0) où le transformateur TA est démagnétisé (le signal Is est à haut niveau). Au moment où le signal Pp passe à haut niveau, le signal VS5 passe à haut niveau et le transistor de puissance conduit.

On suppose ensuite qu'à un instant t1 le signal Ps passe également à haut niveau tandis que le signal Pp est toujours à haut niveau. Comme le montre la courbe VS5, avec le circuit selon l'invention, le signal VS5 passe à bas niveau à la fin du signal Pp indépendamment du signal Ps. Ce n'est qu'à l'instant t4, quand le transformateur principal TA sera démagnétisé que la conduction liée à la présence du signal Ps sera déclenchée pendant la durée t4-t5 inférieure à la durée de cette impulsion Ps.

A l'instant t6, un signal Pp réapparaît tandis que le transformateur s'est démagnétisé (Is à haut niveau). On a donc une conduction du transistor principal entre les instants t6 et t7 tandis que signal Pp est présent. Si un signal Ps apparaît ensuite à l'instant t8 alors que le transformateur principal TA n'est pas démagnétisé, la conduction est retardée pour ne commencer qu'à l'instant t9 jusqu'à l'instant t10 de fin du signal Ps.

La suite de la séquence se déroule sans problème particulier. On notera toutefois pour la dernière impulsion Pp, à l'instant t11, qu'une impulsion Ps apparaît à un instant t12 tandis que cette impulsion Pp est encore présente. Si l'impulsion Ps se termine à l'instant t13, ceci n'entraînera pas la fin de la conduction du transistor principal puisque, selon la présente invention, c'est seulement l'impulsion qui a provoqué la mise en conduction du transistor principal qui peut entraîner son blocage. Ainsi, le transistor principal cesse d'être conducteur seulement à l'instant t14 quand cette dernière impulsion Pp revient à zéro.

Le principal avantage de la présente invention est de permettre la réalisation d'une alimentation à découpage pouvant fonctionner indifféremment sous deux modes de régulation, et munie d'un dispositif de contrôle de démagnétisation qui permet de faire l'économie de composants chers et surdimensionnés, tout en ne nécessitant qu'un nombre limité de composants actifs et passifs.

## Revendications

1. Alimentation à découpage comprenant un système de régulation primaire (CI3) et un système de régulation secondaire (CI2, CI1), chacun de ces deux systèmes de régulation pouvant être amené à délivrer en sortie (19, 17) des signaux (Pp, Ps) constitués de créneaux périodiques de largeurs variables pouvant prendre un premier état logique (0) correspondant à un ordre de blocage d'un commutateur principal (Tp) et un second état logique (1) correspondant à un ordre de mise en conduction de ce commutateur principal, caractérisée en ce qu'elle comprend en outre :
- un moyen de comparaison (22), par rapport à une valeur de tension faible ou nulle (23), de la tension de sortie (VS4) d'un enroulement secondaire (ES4), la sortie du moyen de comparaison (22) délivrant un signal (Is) prenant un second état logique (1) lorsque le transformateur (TA) de l'alimentation à découpage est démagnétisé et un premier état logique (0) lorsque ce transformateur n'est pas démagnétisé,
- un circuit logique (CL) recevant en entrée le signal de sortie (Is) du moyen de comparaison (22), le signal de sortie (Pp) du régulateur primaire et le signal de sortie (Ps) du régulateur secondaire, ce circuit logique délivrant en sortie (25) un signal de commande (VS5) du commutateur principal (Tp) pouvant prendre un premier état logique (0) pour le blocage du commutateur principal ou un second état logique (1) pour sa mise en conduction, en fonction des critères suivants :
* le signal de commande passe à l'état 1 si le signal de sortie du comparateur est à l'état 1 et si le signal de sortie d'au moins un des régulateurs est à l'état 1,
* le signal de commande passe à l'état 0 quand le signal de sortie du régulateur qui a provoqué la mise à 1 du signal de commande passe à l'état 0.

2. Alimentation à découpage selon la revendication 1, caractérisée en ce que ledit circuit logique (CL) comprend :
- deux circuits logiques à bascule identiques (B1, B2) comprenant chacun une entrée de basculement (S), une entrée de remise à zéro (R) et une sortie inversée (Q*),
- une première porte ET (32) et une seconde porte ET (33), à deux entrées chacune, et une porte OU (34) à deux entrées,
- un ensemble de connexions constituées de telle sorte que :
le signal (Is) parvient à la fois sur les entrées R des circuits (B1, B2),
les sorties des première et seconde portes ET (32, 33) sont respectivement reliées aux entrées S des circuits (B1, B2),
les sorties (Q*) des circuits (B1 et B2) sont reliées respectivement aux entrées des seconde (33) et première (32) portes ET,
le signal primaire (Pp) parvient à l'autre entrée de la première porte ET (32),
le signal secondaire (Ps) parvient à l'autre entrée de la seconde porte ET (33), et
les sorties des deux portes ET sont reliées respectivement aux deux entrées de la porte OU (34) dont la sortie correspond au pont de sortie (25) du circuit logique (CL).

3. Alimentation à découpage comprenant un dispositif de contrôle de la démagnétisation d'un transformateur selon la revendication 2, caractérisée en ce que chacun des circuits logiques à bascule (B1, B2) est constitué :
d'une bascule de type D (D1, D2), comprenant des entrées (D, CK) et des sorties (Q, Q*),
d'une porte ET (35, 37) à deux entrées,
d'une porte OU (36, 38) à deux entrées, et
de diverses connexions constituées de façon que l'entrée D est reliée à la sortie (Q*), la sortie (Q) est reliée à l'une des entrées de la porte ET (35, 37), la sortie de la porte ET (35, 37) est reliée à l'une des entrées de la porte OU (36, 38) et la sortie de la porte OU est reliée à l'entrée (CK), l'autre entrée de la porte OU (36, 38) constituant l'entrée S du circuit à bascule (B1, B2), l'autre entrée de la porte ET (35, 37) constituant l'entrée R du circuit à bascule (B1, B2) et la sortie (Q*) de la bascule (D1, D2) constituant la même sortie (Q*) du circuit à bascule (B1, B2).

## Patentansprüche

1. Sperrwandler, welcher ein primäres Regelungssystem (CI3) und ein sekundäres Regelungssystem (CI2, CI1) umfaßt, wobei jedes dieser beiden Regelungssyteme veranlaßt werden kann, am Ausgang (19, 17) Signale (Pp, Ps) abzugeben, die aus periodischen Rechteckimpulsen mit variabler Länge bestehen und die einen ersten logischen Zustand (0), der einem Befehl zum Blockieren eines Hauptschalters (Tp) entspricht, und einen zweiten logischen Zustand (1) annehmen kann, der einem Befehl entspricht, den Hauptschalter in einen leitenden Zustand zu versetzen, dadurch gekennzeichnet, daß er des weiteren umfaßt:
- eine Vergleichseinrichtung (22) bezüglich eines niedrigen oder verschwindenden Spannungswerts (23) für die Ausgangsspannung (VS4) einer Sekundärspule (ES4), wobei der Ausgang der Vergleichseinrichtung (22) ein Signal (Is) abgibt, das einen zweiten logischen Zustand (1) annimmt, wenn der Transformator (TA) des Sperrwandlers demagnetisiert ist, und einen ersten logischen Zustand (0), wenn dieser Transformator nicht demagnetisiert ist,
- eine logische Schaltung (CL), die am Eingang das Ausgangssignal (Is) der Vergleichseinrichtung (22), das Ausgangssignal (pp) des Primärreglers und das Ausgangssignal (Ps) des Sekundärreglers aufnimmt, wobei diese logische Schaltung an ihrem Ausgang (25) ein Signal zur Regelung (VS5) des Hauptschalters (Tp) abgibt, welches einen ersten logischen Zustand (0) zum Blockieren des Hauptschalters oder einen zweiten logischen Zustand (1), um ihn in den leitenden Zustand zu versetzen, in Abhängigkeit von den folgenden Kriterien annehmen kann:
* Das Regelungssignal geht in den Zustand 1 über, wenn sich das Ausgangssignal der Vergleichseinrichtung im Zustand 1 und das Ausgangssignal von mindestens einem der Regler im Zustand 1 befindet,
* Das Regelungssignal geht in den Zustand 0 über, wenn das Ausgangssignal des Reglers, der veranlaßt hat, das Regelungssignal auf 1 zu setzen, in den Zustand 0 übergeht.

2. Sperrwandler nach Anspruch 1, dadurch gekennzeichnet, daß die logische Schaltung (CL) umfaßt:
- Zwei identische logische Kippschaltungen (B1, B2) welche jeweils einen Setzeingang (S), einen Rücksetzeingang R und einen invertierten Ausgang (Q*) umfassen,
- ein erstes UND-Gatter (32) und ein zweites UND-Gatter (33), jeweils mit zwei Eingängen, und ein ODER-Gatter (34) mit zwei Eingängen,
- eine Gruppe von Verbindungen, die so hergestellt sind, daß
das Signal (Is) zugleich zu den Eingängen R der Schaltungen (B1, B2) gelangt,
die Ausgänge des ersten und zweiten UND-Gatters (32, 33) jeweils mit den Eingängen S der Schaltungen (B1, B2) verbunden sind,
die Ausgänge (Q*) der Schaltungen (B1, B2) jeweils mit den Eingängen des zweiten (33) und ersten (32) UND-Gatters verbunden sind,
das Primärsignal (pp) zu dem anderen Eingang des ersten UND-Gatters (32) gelangt,
das Sekundärsignal (Ps) zu dem anderen Eingang des zweiten UND-Gatters (33) gelangt und
die Ausgänge der zwei UND-Gatter jeweils mit zwei Eingängen des ODER-Gatters (34) verbunden sind,
dessen Ausgang dem punkt des Ausgangs (25) der logischen Schaltung (CL) entspricht.

3. Sperrwandler, welcher eine Vorrichtung zur Kontrolle der Demagnetisierung eines Transformators nach dem Anspruch 2 enthält, dadurch gekennzeichnet, daß jede der logischen Kippschaltungen (B1, B2)
- aus einem Kippglied des Typs D (D1, D2), welches Eingänge (D, CK) und Ausgänge (Q, Q*) umfaßt,
- aus einem UND-Gatter (35, 37) mit zwei Eingängen,
- aus einem ODER-Gatter (36, 38) mit zwei Eingängen und verschiedenen Verbindungen besteht, die so hergestellt sind, daß der Eingang D mit dem Ausgang (Q*) verbunden ist, der Ausgang (Q) mit einem der Eingänge des UND-Gatters (35, 37) verbunden ist, der Ausgang des UND-Gatters (35, 37) mit einem der Eingänge des ODER-Gatters (36, 38) verbunden ist und der Ausgang des ODER-Gatters mit dem Eingang (CK) verbunden ist, wobei der andere Eingang des ODER-Gatters (36, 38) den Eingang S der Kippschaltung (B1, B2) bildet, der andere Eingang des UND-Gatters (35, 37) den Eingang R der Kippschaltung (B1, B2) bildet und der Ausgang (Q*) des Kippglieds (D1, D2) denselben Ausgang (Q*) der Kippschaltung (B1, B2) bildet.

## Claims

1. A switching power supply comprising a primary regulation system (CI3) and a secondary regulation system (CI2, CI1), each of said systems being capable of supplying at the output (19, 17) signals (Pp, Ps) constituted by periodical square pulses of variable widths liable to be set to a first logic state ("0") corresponding to a switching off order of a main switch (Tp) and to a second logic state ("1") corresponding to a switching on order of this main switch, characterized in this that it further comprises:
- a comparison means (22), with respect to a low or null voltage value (23), for the output voltage (VS4) of a secondary winding (ES4), the output of the comparison means (22) supplying a signal (Is) being set to a second logic state ("1") when the transformer (TA) of the switching power supply is demagnetized and to a first logic state ("0") when said transformer is not demagnetized.
- a logic circuit (CL) receiving the output signal (Is) of the comparison means (22), the output signal (Pp) of the primary regulator and the output signal (Ps) of the secondary regulator, this logic circuit supplying at its output (25) a control signal (VS5) of the main switch (Tp) which can be set to a first logic state ("0") for the switching OFF of the main switch or a second logic state ("1") for its switching ON, as a function of the following criteria:
. the control signal is set to said second logic state ("1") if the output signal of the comparator is set to said second logic state ("1") and if the output signal of at least one of the regulators is set to said second logic state ("1"),
. the control signal is set to said first logic state ("0") when the output signal of the regulator which has caused the control signal to be set to said second logic state ("1") is reset.

2. A switching power supply according to claim 1, characterized in this that said logic circuit (CL) comprises:
- two logic circuits provided with an identical flip-flop (B1, B2) each of which comprising a set input (S), a reset input (R) and a complementary output (Q*),
- a first AND gate (32) and a second AND gate (33), each of which is provided with two inputs, and a two-inputs OR gate (34),
- a set of connections so constituted that:
. the signal (Is) arrives on both the inputs R of the circuits (B1, B2),
. the outputs of the first and second AND gates (32, 33) are respectively connected to the inputs S of said flip-flops (B1, B2),
. the outputs (Q*) of the flip-flops (B1 and B2) are respectively connected to the inputs of the second (33) and first (32) AND gates,
. the primary signal (Pp) arrives at the other input of the first AND gate (32),
. the secondary signal (Ps) arrives at the other input of the second AND gate (33), and
. the outputs of both AND gates are respectively connected to the two inputs of the OR gate (34), the output of which corresponds to the input point (25) of said logic circuit (CL).

3. A switching power supply comprising a transformer demagnetization monitoring device according to claim 2, characterized in this that each of the logic flip-flop circuits (B1, B2) is constituted by:
. a D-type flip-flop (D1, D2) comprising inputs (D, CK) and output (Q, Q*),
. a two-inputs AND gate (35, 37),
. a two-inputs OR gate (36, 38), and
. various connections so constituted that the D input is connected to the Q* output, the Q output is connected to one of the AND gate inputs (35, 37), the output of the AND gate (35, 37), the output of the AND gate (35, 37) is connected to one of the OR gate inputs (36, 38) and the OR gate output is connected to the CK input, the other OR gate input (36, 38) constituting the S input of the flip-flop circuit (B1, B2), the other AND gate input (35, 37) constituting the R input of the flip-flop circuit (B1, B2) and the Q* output of the flip-flop (D1, D2) constituting the same Q* output of the flip-flop circuit (B1, B2).
